# FASCICULE DE BREVET EUROPEEN

(11) **EP 0 910 245 B1**
(45) Date de publication et mention de la délivrance du brevet: **07.05.2003**
(21) Numéro de dépôt: 97928336.3
(22) Date de dépôt: 11.06.1997
(51) Int. Cl.: A01M 29/02, A01M 29/04

(54) **ARTIFICE DE LUTTE CONTRE LE PERIL AVIAIRE**
FEUERWERK ZUM BEKÄMPFEN VON VOGELGEFAHR
DEVICE FOR CONTROLLING BIRD STRIKE HAZARDS

(30) Priorité: 14.06.1996 FR 9607459
(43) Date de publication de la demande: 28.04.1999
(73) Titulaire: ETIENNE LACROIX - TOUS ARTIFICES SA, 31600 Muret (FR)
(72) Inventeur: TOUGERON, Raymond, F-09100 Pamiers (FR); CASENAVE, Daniel, F-31320 Castanet Tolosan (FR)
(74) Mandataire: Jacobson, Claude
(86) Numéro de dépôt international: FR9701047
(87) Numéro de publication internationale: WO97047191

(56) Documents cités:
- CH-A- 279 298
- DE-U- 8 506 299
- FR-A- 701 888
- US-A- 4 457 233

## Description

L'invention est relative à des moyens pour disperser des oiseaux dans les zones d'aéroport.

Les oiseaux constituent un fléau réel pour les aéroports. Ils occasionnent des retards considérables, voire des accidents au décollage, s'ils sont pris par un réacteur d'avion en pleine puissance. La lutte contre le péril aviaire est donc un problème majeur des aéroports.

On connaît par exemple des systèmes électroniques installés à proximité des pistes de décollage et d'atterrissage, qui émettent des signaux de fréquences susceptibles d'effrayer les oiseaux par imitation de cris d'animaux prédateurs. Cependant, les oiseaux vivant près de l'aéroport s'habituent à ces systèmes électroniques qui, par conséquent, deviennent inefficaces.

Par ailleurs, on utilise également des cartouches de chasse classiques. L'inconvénient de ce moyen réside dans le fait que la cartouche de chasse est seulement de faible portée, environ 50m, et qu'elle est bruyante au départ du coup. Par conséquent, les oiseaux peuvent localiser le tireur par le bruit de départ du tir et s'éloigner sans pour autant quitter les zones à risque de l'aéroport.

D'après US-A-4 457 233, on connaît une bombe aérienne destinée à effrayer les oiseaux comprenant un canon de tir cylindrique creux contenant une charge propulsive dont la mise à feu provoque une première détonation provoquant le lancement de la bombe, une seconde détonation se produisant lorsque le projectile formant la bombe explose quelques secondes plus tard.

Sur des aéroports de faible fréquentation, on se sert aussi de faucons spécialement dressés issus de fauconneries pour éloigner des oiseaux de l'aéroport. Mais cette technique de lutte contre le péril aviaire ne peut pas être appliquée aux aéroports ayant un trafic aérien intense.

L'invention vise à pallier ces inconvénients en créant un artifice à effet sonore destiné à effrayer à distance des oiseaux, qui soit sans signature sonore au départ.

A cet effet, l'invention a pour objet un artifice de lutte contre le péril aviaire, selon la revendication 1.

D'autres caractéristiques et avantages de l'invention ressortiront de la description suivante donnée à titre d'exemple sans caractère limitatif en regard du dessin annexé sur lequel :
- La figure 1 est une vue en coupe longitudinale d'un artifice anti péril aviaire selon l'invention, et
- La figure 2 est une vue en coupe longitudinale d'une variante de l'artifice selon l'invention.

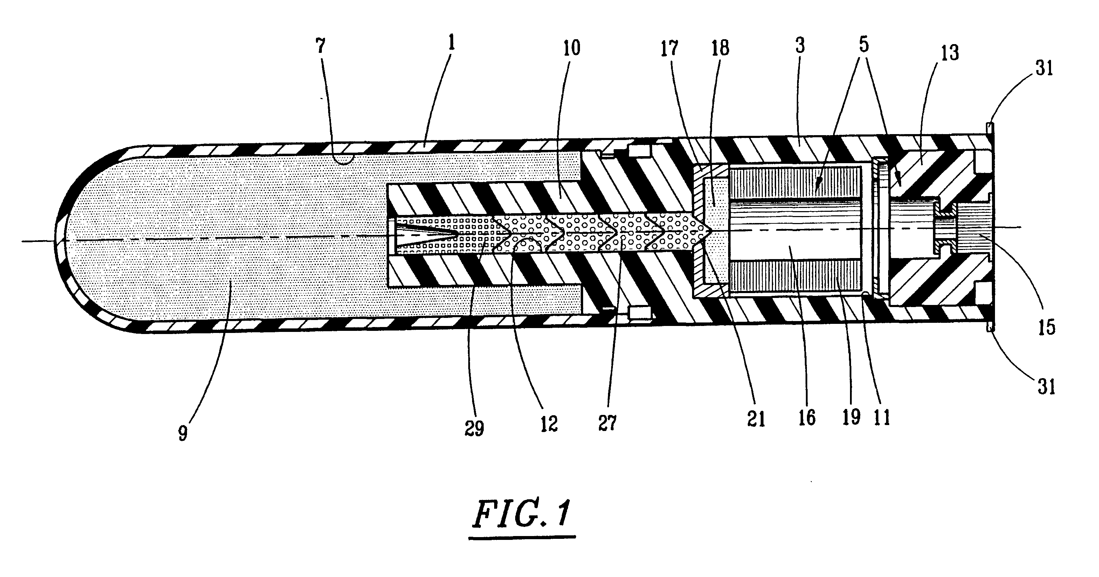

Sur la figure 1 on a représenté un artifice de lutte contre le péril aviaire suivant l'invention comprenant une enveloppe 1 de forme cylindro-ogivale reliée par son extrémité ouverte à une embase 3 comprenant un moteur 5.

L'enveloppe 1 et l'embase 3 délimitent un logement 7 contenant une charge à effet sonore 9 destinée à effrayer des oiseaux.

L'embase 3 possède une forme générale extérieure cylindrique et comporte du côté du logement 7 un prolongement cylindrique 10 de plus faible diamètre qui fait saillie à l'intérieur de ce logement 7 et est entouré par la charge 9 à effet sonore.

L'embase 3 comporte en outre du côté opposé au prolongement 10, un puits axial 11 dans lequel est logé le moteur 5, ainsi qu'un canal 12 axial destiné à loger une composition d'allumage à retardement de la charge à effet sonore 9. Ce canal 12 s'étend à travers le prolongement 10 pour déboucher par une extrémité dans le logement 7 et communique par son autre extrémité avec le puits axial 11.

Le moteur 5 comprend une tuyère 13 logée à l'extrémité du puits 11 opposée au prolongement 10 et fixée dans l'embase 3 par sertissage, collage ou vissage. Cette tuyère 13 comporte une amorce 15 à percussion ou électrique suivant le type de lanceur utilisé.

Entre la tuyère 13 et l'extrémité du puits 11 proche du prolongement 10 est délimitée une chambre de combustion 16 qui est en communication du côté de la tuyère 13 avec l'amorce 15. L'extrémité du puits 11 à l'opposé de l'amorce 15 reçoit une coupelle 17 contenant une composition d'initiation 18 du moteur 5. Radialement, la chambre de combustion 16 est délimitée par un propergol solide 19 en forme d'un cylindre creux en contact avec la composition d'initiation 18.

Par ailleurs, le fond de la coupelle 17 comporte en son centre un trou 21.

La composition d'allumage à retardement est constitué d'un retard pyrotechnique 27 qui remplit le canal 12 à peu près aux trois quarts de sa longueur et qui est en contact avec la composition d'initiation 18 à travers le trou 21.

Dans le prolongement du retard pyrotechnique 27 et en contact avec celui-ci, une composition d'allumage 29 remplit le quart restant du canal 12. De son autre côté, proche de la charge à effet sonore 9, elle est réalisée sous forme d'un rendu de feu classiquement utilisé en pyrotechnie.

Avantageusement, l'enveloppe 1, l'embase 3 et la tuyère 13 sont réalisées en matière plastique, par exemple du type polyéthylène chargé (P.A.6.6) ou du type polypropylène, afin de ne pas détériorer les pâles d'un réacteur au cas où des débris d'un tel projectile s'introduiraient par accident dans un réacteur d'avion.

Le projectile suivant l'invention est destiné à être tiré à partir d'une arme individuelle, par exemple un pistolet de calibre 4 muni d'un réducteur, ou d'un lanceur comportant un canon adapté au calibre du projectile et assez long pour un bon guidage du projectile, ainsi qu'un dispositif de mise à feu de l'amorce 15. A cet effet, l'embase 3 comporte à son extrémité portant la tuyère 13, deux ergots 31 latéraux en matière plastique qui assurent la tenue du projectile dans le lanceur utilisé.

L'artifice de lutte contre le péril aviaire suivant l'invention fonctionne de la manière suivante. Lors d'un tir à l'aide d'un lanceur adapté à cet effet, il y a d'abord initiation de l'amorce 15. Cette initiation provoque l'allumage par projection du feu de l'amorce à travers la chambre de combustion 16 sur la composition d'initiation 18 qui à son tour assure la mise à feu du propergol 19 ainsi que du retard pyrotechnique 27.

Sous l'effet de la poussée obtenue par la combustion du propergol 19, les ergots 31 sont rompus et libèrent le projectile qui est propulsé suivant une trajectoire balistique prédéterminée par le tireur. Lors du trajet de l'artifice, le retard pyrotechnique 27 se consume pendant un temps prédéterminé jusqu'à initier à son tour la composition d'allumage 29 qui fait enfin exploser la charge à effet sonore 9. Par l'effet sonore de la déflagration, les oiseaux, vers lesquels le projectile a été tiré, sont dispersés.

Avantageusement, les quantités de retard pyrotechnique 27 et de propergol 19 sont déterminées de façon que le retard pyrotechnique 27 initie la charge à effet sonore 9 par l'intermédiaire de la composition d'allumage 29.

Suivant la quantité de propergol, la portée d'un tel artifice peut atteindre jusqu'à 400 mètres.

Grâce au moteur propulseur, le départ du projectile n'est pas audible à distance et de ce fait, il ne peut pas être localisé prématurément par les oiseaux. Par conséquent, l'explosion de la charge à effet sonore provoque un effet de surprise sur les oiseaux qui peuvent ainsi être éloignés efficacement des zones à risque de l'aéroport.

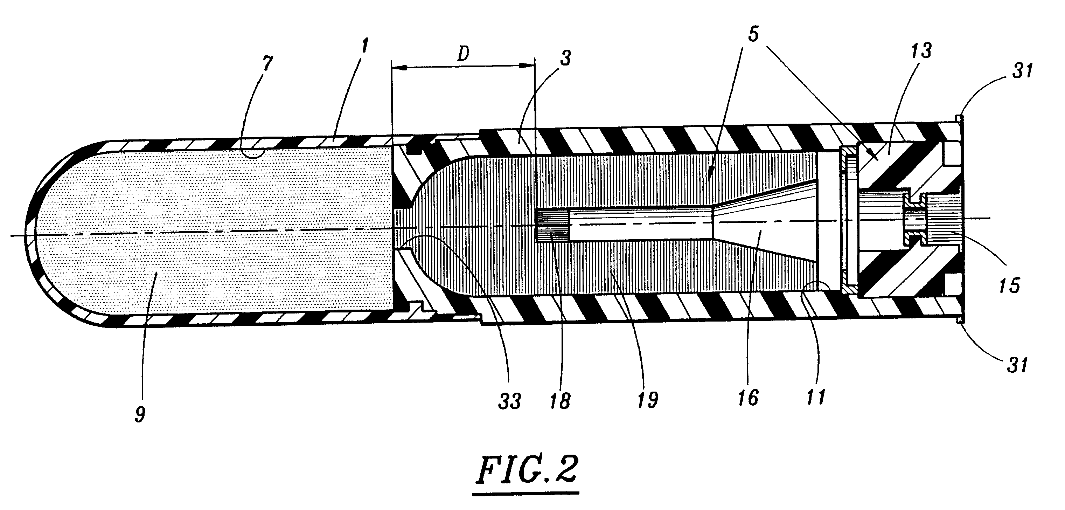

La figure 2 présente une variante de l'artifice de lutte contre le péril aviaire. Les éléments correspondants à ceux de l'artifice représenté sur la figure 1, ont été désignés par les mêmes numéros de référence.

Cette variante se distingue de l'artifice représenté sur la figure 1 par le fait que la charge propulsive 19 forme, elle-même, l'élément d'allumage à retardement de la charge à effet sonore 9.

A cet effet, le puits axial 11 de l'embase 3 est plus long que celui de la figure 1 et possède, du côté de la charge à effet sonore 9, une forme cylindro-ogivale. Ce puits axial 11 communique par l'extrémité opposée à la tuyère 13 avec le logement 7 contenant la charge à effet sonore 9 par un passage 33. Par ailleurs, l'embase 3 de la variante ne comporte pas de prolongement qui fait saillie à l'intérieur du logement 7.

Selon la variante, le propergol solide 19 épouse la paroi de l'embase délimitant le puits axial 11, et est en contact avec la charge à effet sonore 9 à travers le passage 33. Le propergol solide 19 est creusé en son centre du côté de la tuyère 13 à peu près aux trois quarts de sa longueur formant ainsi une chambre allongée de combustion 16. A l'extrémité de la chambre 16, opposée à la tuyère, est disposée une composition d'initiation 18 du propergol 19, par exemple un renfort d'allumage. On comprend alors que le puits axial 11 dans sa partie en forme cylindro-ogivale située entre la composition d'initiation 18 et le passage 33, est entièrement rempli de propergol 19.

Le fonctionnement de l'artifice représenté sur la figure 2 est similaire à celui de l'artifice représenté sur la figure 1.

En effet, lors d'un tir à l'aide d'un lanceur adapté à cet effet, il y a d'abord initiation de l'amorce 15. Cette initiation provoque l'allumage par projection du feu de l'amorce à travers la chambre de combustion 16 sur la composition d'initiation 18 qui à son tour assure la mise à feu du propergol 19.

Sous l'effet de la poussée obtenue par la combustion du propergol 19, les ergots 31 sont rompus et libèrent le projectile qui est propulsé en direction d'une zone visée par le tireur. Lors du trajet de l'artifice, le propergol 19 se consume. Quand le propergol 19 situé entre la composition d'initiation 18 et la surface de contact avec la charge à effet sonore 9 est consumé, la charge à effet sonore 9 est initiée à son tour et explose. De ce fait, les oiseaux, vers lesquels le projectile a été tiré, sont dispersés.

On comprend que le retard entre le lancement de l'artifice et l'explosion de la charge à effet sonore 9 est déterminé par la distance D entre la composition d'initiation 18 et la surface de contact propergol/charge à effet sonore.

## Revendications

1. Artifice de lutte contre le péril aviaire, constitué d'un projectile autopropulsé destiné à être tiré à partir d'une arme individuelle, ledit projectile comprenant une amorce, un moteur (5) de propulsion au moyen duquel le départ du projectile est inaudible à distance, de sorte qu'il ne puisse pas être localisé prématurément par les oiseaux, ledit moteur de propulsion étant directement initié par l'amorce, le projectile comprenant en outre un élément d'allumage à retardement d'une charge à effet sonore (9) destinée à effrayer des oiseaux et logée dans ledit projectile.

2. Artifice contre le péril aviaire selon la revendication 1, **caractérisé en ce que** l'élément d'allumage à retardement est formé par une charge propulsive (19) du moteur (5) de propulsion et **en ce que** l'artifice comprend un dispositif (15, 18) d'initiation de la charge propulsive (19).

3. Artifice contre le péril aviaire selon la revendication 2, **caractérisé en ce que** le dispositif d'initiation (15, 18) du moteur (5) comprend l'amorce (15) contenue dans une tuyère (13) du moteur et communiquant avec une composition d'initiation (18) à travers une chambre de combustion (16) du moteur (5) ménagée dans la charge propulsive (19), ladite composition d'initiation (18) étant en contact avec la charge propulsive (19).

4. Artifice contre le péril aviaire selon la revendication 3, **caractérisé en ce que** le moteur (5) de propulsion est logé dans un puits axial (11) d'une embase (3), puits axial (11) dont une extrémité communique à travers un passage (33) avec un logement (7) formé par une enveloppe (1) reliée à l'embase (3) et contenant la charge à effet sonore (9), et dont l'autre extrémité loge la tuyère (13) fixée dans l'embase (3), et **en ce que** la charge propulsive (19) du moteur (5) est en contact avec la charge à effet sonore (9) à travers le passage (33).

5. Artifice contre le péril aviaire selon la revendication 1, **caractérisé en ce que** l'élément d'allumage à retardement comprend un retard pyrotechnique (27) disposé entre le moteur (5) de propulsion et la charge à effet sonore (9), et un dispositif (15, 18) d'initiation dudit retard pyrotechnique (27).

6. Artifice contre le péril aviaire selon la revendication 5, **caractérisé en ce que** le retard pyrotechnique (27) est disposé dans un canal (12) ménagé dans une embase (3) logeant le moteur de propulsion (5) et **en ce que** le dispositif d'initiation (15, 18) forme également le dispositif d'initiation du moteur de propulsion (5).

7. Artifice contre le péril aviaire selon la revendication 6, **caractérisé en ce que** le canal (12) s'étend axialement dans l'embase (3) et dans un prolongement (10) de celle-ci qui fait saillie à l'intérieur d'un logement (7) formé par une enveloppe (1) reliée à l'embase (3) et contenant la charge à effet sonore (9).

8. Artifice contre le péril aviaire selon l'une des revendications 6 ou 7, **caractérisé en ce que** le dispositif d'initiation (15, 18) du retard pyrotechnique et du moteur (5) comprend l'amorce (15) contenue dans une tuyère (13) du moteur (5) et communiquant avec une composition d'initiation (18) à travers une chambre de combustion (16) du moteur (5), la composition d'initiation (18) étant en contact avec une charge propulsive (19) du moteur (5) et le retard pyrotechnique (27).

9. Artifice contre le péril aviaire selon l'une quelconque des revendications 6 à 8, **caractérisé en ce qu'**une composition d'allumage (29) est interposée entre le retard pyrotechnique (27) et la charge à effet sonore (9) dans ledit canal (12).

10. Artifice contre le péril aviaire selon une des revendications 8 ou 9, **caractérisé en ce que** le moteur de propulsion (5) est logé dans un puits axial (11) réalisé dans l'embase (3) et communiquant avec le canal (12) par son extrémité proche du logement (10), ladite extrémité du puits logeant une coupelle (17) contenant la composition d'initiation (18) en contact avec le retard pyrotechnique (27) à travers un trou (21) situé dans le fond de la coupelle (17), la charge propulsive (19) en forme de cylindre creux et délimitant radialement la chambre de combustion (16), étant partiellement en contact avec la composition d'initiation (18), la tuyère (13) étant logée à l'extrémité du puits (11) opposée au prolongement (10) et étant fixée dans l'embase (3).

11. Artifice contre le péril aviaire selon l'une quelconque des revendications 4 et 8 à 10, **caractérisé en ce que** la tuyère (13), l'embase (3) et l'enveloppe (1) sont réalisées toutes en matière plastique.

12. Artifice contre le péril aviaire selon l'une quelconque des revendications précédentes, **caractérisé en ce que** deux ergots (31) latéraux en matière plastique destinés à assurer la tenue du projectile dans l'arme de tir de celui-ci et à être rompus sous l'effet de la poussée du moteur (5) de propulsion, pour libérer le projectile, sont prévus à l'extrémité d'une embase (3) portant une tuyère (13) du moteur de propulsion.

## Claims

1. A device for controlling bird strike, consisting of a self-propelled projectile intended to be fired from a light arm, the said projectile comprising a detonator, a propulsion motor (5) with the aid of which the launch of the projectile is inaudible at a distance, with the result that it cannot be prematurely located by birds, the said propulsion motor being directly initiated by the detonator, the projectile furthermore comprising a delayed-action ignition member for a sound-effect charge (9) intended to scare birds and accommodated in the said projectile.

2. A device for controlling bird strike according to Claim 1, **characterised in that** the delayed-action ignition member is formed by a propelling charge (19) of the propulsion motor (5) and **in that** the device comprises an arrangement (15, 18) for initiating the propelling charge (19).

3. A device for controlling bird strike according to Claim 2, **characterised in that** the initiating arrangement (15, 18) of the motor (5) comprises the detonator (15) contained in a duct (13) of the motor and communicating with an initiation composition (18) via a combustion chamber (16) of the motor (5) provided in the propelling charge (19), the said initiation composition (18) being in contact with the propelling charge (19).

4. A device for controlling bird strike according to Claim 3, **characterised in that** the propulsion motor (5) is accommodated in an axial shaft (11) of a base (3), one end of which axial shaft (11) communicates via a passage (33) with a housing (7) formed by a casing (1) connected to the base (3) and containing the sound-effect charge (9), and the other end of which axial shaft (11) accommodates the duct (13) fixed in the base (3), and **in that** the propelling charge (19) of the motor (5) is in contact with the sound-effect charge (9) via the passage (33).

5. A device for controlling bird strike according to Claim 1, **characterised in that** the delayed-action ignition member comprises a pyrotechnic retarder (27) positioned between the propulsion motor (5) and the sound-effect charge (9), and an arrangement (15, 18) for initiating the said pyrotechnic retarder (27).

6. A device for controlling bird strike according to Claim 5, **characterised in that** the pyrotechnic retarder (27) is positioned in a channel (12) provided in a base (3) accommodating the propulsion motor (5), and **in that** the initiating arrangement (15, 18) similarly forms the initiating arrangement (15, 18) of the propulsion motor (5).

7. A device for controlling bird strike according to Claim 6, **characterised in that** the channel
(12) extends axially within the base (3) and within an extension (10) thereof which projects into the interior of a housing (7) formed by a casing (1) connected to the base (3) and containing the sound-effect charge (9).

8. A device for controlling bird strike according to one of Claims 6 or 7, **characterised in that** the initiating arrangement (15, 18) of the pyrotechnic retarder and of the motor (5) comprises the detonator (15) contained in a duct (13) of the motor (5) and communicating with an initiation composition (18) via a combustion chamber of the motor (5), the initiation composition (18) being in contact with a propelling charge (19) of the motor (5) and the pyrotechnic retarder (27).

9. A device for controlling bird strike according to any one of Claims 6 to 8, **characterised in that** an ignition composition (29) is positioned between the pyrotechnic retarder (27) and the sound-effect charge (9) within the said channel (12).

10. A device for controlling bird strike according to one of Claims 8 or 9, **characterised in that** the propulsion motor (5) is accommodated in an axial shaft (11) formed in the base (3) and communicating with the channel (12) by means of its end close to the housing (10), the said end of the shaft accommodating a tray (17) containing the initiation composition (18) in contact with the pyrotechnic retarder (27) via a hole (21) situated in the base of the tray (17), the propelling charge (19) in the form of a hollow cylinder and radially delimiting the combustion chamber (16) being partially in contact with the initiation composition (18), the duct (13) being accommodated at the end of the shaft (11) opposite the extension (10) and being fixed in the base (3).

11. A device for controlling bird strike according to any one of Claims 4 and 8 to 10, **characterised in that** the duct (13), the base (3) and the casing (1) are all formed of a plastics material.

12. A device for controlling bird strike according to any one of the preceding claims, **characterised in that** two lateral pins (31) made of a plastics material and intended to maintain the projectile in the arm for firing the latter and to be broken under the effect of the thrust of the propulsion motor (5) for the purpose of releasing the projectile, are provided at the end of a base (3) bearing a duct (13) of the propulsion motor (5).

## Patentansprüche

1. Zündmittel zur Bekämpfung von Vogelschlaggefahr, gebildet durch ein selbstangetriebenes Projektil, welches für ein Abschießen aus einer Handwaffe bestimmt ist, wobei das Projektil einen Zünder, einen Vortriebsmotor (5), mittels dessen das Abgehen des Projektils aus der Ferne unhörbar ist, aufweist, so dass es von Vögeln nicht vorzeitig lokalisiert werden kann, wobei der Vortriebsmotor direkt durch den Zünder in Gang gesetzt wird, wobei das Projektil ferner ein Element zur verzögerten Zündung einer Toneffektladung (9) aufweist, die dazu bestimmt ist, Vögel zu erschrecken, und in dem Projektil aufgenommen ist.

2. Zündmittel gegen Vogelschlaggefahr nach Anspruch 1, **dadurch gekennzeichnet, dass** das Element zur verzögerten Zündung durch eine Treibladung (19) des Vortriebsmotors (5) gebildet ist, und dass das Zündmittel eine Vorrichtung (15, 18) zur Initiierung der Treibladung (19) aufweist.

3. Zündmittel gegen Vogelschlaggefahr nach Anspruch 2, **dadurch gekennzeichnet, dass** die Initiiervorrichtung (15, 18) des Motors (5) den Zünder (15) enthalten in einem Düse (13) des Motors und mit einer Initiierzusammensetzung (18) über eine Brennkammer (16) des Motors (5), die in der Treibladung (19) ausgenommen ist, in Verbindung stehend aufweist, wobei die Initiierzusammensetzung (18) mit der Treibladung (19) in Berührung steht.

4. Zündmittel gegen Vogelschlaggefahr nach Anspruch 3, **dadurch gekennzeichnet, dass** der Vortriebsmotor (5) in einer Axialbohrung (11) eines Sockels (3) aufgenommen ist, wobei ein Ende der Axialbohrung (11) über einen Durchgang (33) mit einer Aufnahme (7) in Verbindung steht, die durch einen Mantel (1) gebildet ist, der mit dem Sockel (3) verbunden ist und die Toneffektladung (9) enthält, und wobei das andere Ende der Axialbohrung die in dem Sockel (3) befestigte Düse (13) aufnimmt, und dass die Treibladung (19) des Motors (5) mit der Toneffektladung (9) über den Durchgang (33) in Berührung steht.

5. Zündmittel gegen Vogelschlaggefahr nach Anspruch 1, **dadurch gekennzeichnet, dass** das Element zur verzögerten Zündung einen pyrotechnischen Retardierer (27), der zwischen dem Vortriebsmotor (5) und der Toneffektladung (9) angeordnet ist, und eine Vorrichtung (15, 18) zur Initiierung des pyrotechnischen Retardierers (27) aufweist.

6. Zündmittel gegen Vogelschlaggefahr nach Anspruch 5, **dadurch gekennzeichnet, dass** der pyrotechnische Retardierer (27) in einem Kanal (12) angeordnet ist, der in einem den Vortriebsmotor (5) aufnehmenden Sockel (3) ausgebildet ist, und dass die Initiiervorrichtung (15, 18) auch die Initiiervorrichtung des Vortriebsmotors (5) bildet.

7. Zündmittel gegen Vogelschlaggefahr nach Anspruch 6, **dadurch gekennzeichnet, dass** der Kanal (12) sich axial in dem Sockel (3) und einer Verlängerung (10) desselben erstreckt, die in das Innere einer Aufnahme (7) vorspringt, die durch einen mit dem Sockel (3) verbundenen und die Toneffektladung (9) enthaltenden Mantel (1) gebildet ist.

8. Zündmittel gegen Vogelschlaggefahr nach einem der Ansprüche 6 oder 7, **dadurch gekennzeichnet, dass** die Initiiervorrichtung (15, 18) des pyrotechnischen Retardierers und des Motors (5) den Zünder (15) enthalten in einer Düse (13) des Motors (5) und mit einer Initiierzusammensetzung (18) über eine Brennkammer (16) des Motors (5) in Verbindung stehend aufweist, wobei die Initiierzusammensetzung (18) mit der Treibladung (19) des Motors (5) und dem pyrotechnischen Retardierer (27) in Berührung steht.

9. Zündmittel gegen Vogelschlaggefahr nach irgendeinem der Ansprüche 6 bis 8, **dadurch gekennzeichnet, dass** eine Zündzusammensetzung (29) zwischen dem pyrotechnischen Retardierer (27) und der Toneffektladung (9) in dem Kanal (12) zwischengelegt ist.

10. Zündmittel gegen Vogelschlaggefahr nach einem der Ansprüche 8 oder 9, **dadurch gekennzeichnet, dass** der Vortriebsmotor (5) in einer Axialbohrung (11) aufgenommen ist, die in dem Sockel (3) verwirklicht ist und mit dem Kanal (12) über ihr der Aufnahme (10) nahes Ende in Verbindung steht, wobei dieses Ende der Bohrung eine Schale (17), welche die Initiierzusammensetzung (18) durch ein Loch (21), das im Boden der Schale (17) liegt, in Berührung mit dem pyrotechnischen Retardierer (27) enthält, wobei die Treibladung (19) in Hohlzylinderform und die Brennkammer (16) radial begrenzend teilweise in Berührung mit der Initiierzusammensetzung (18) ist, wobei die Düse (13) an dem Ende der Bohrung (11) aufgenommen ist, das der Verlängerung (10) gegenüberliegt, und im Sockel (3) befestigt ist.

11. Zündmittel gegen Vogelschlaggefahr nach irgendeinem der Ansprüche 4 und 8 bis 10, **dadurch gekennzeichnet, dass** die Düse (13), der Sockel (3) und der Mantel (1) alle aus Kunststoff sind.

12. Zündmittel gegen Vogelschlaggefahr nach irgendeinem der vorstehenden Ansprüche, **dadurch gekennzeichnet, dass** zwei seitliche Nasen (31) aus Kunststoff zur Sicherstellung des Verhaltens des Projektils in der Abschusswaffe desselben und für ein Zerstörtwerden unter der Schubwirkung des Vortriebsmotors (5), um das Projektil freizugeben, an dem Ende eines Sockels (3) vorgesehen sind, der eine Düse (13) des Vortriebsmotors trägt.
